# EUROPÄISCHE PATENTANMELDUNG

(11) **EP 0 921 454 A1**
(43) Veröffentlichungstag der Anmeldung: **09.06.1999**
(21) Anmeldenummer: 98122832.3
(22) Anmeldetag: 01.12.1998
(51) Int. Cl.: G05B 19/10, G05D 23/19, G06F 3/023

(54) **Regelgerät mit Benutzerführung**

(30) Priorität: 06.12.1997 DE 29721400 U
(71) Anmelder: VIESSMANN WERKE GmbH & CO., 35107 Allendorf/Eder (DE)
(72) Erfinder: Zander, Jürgen, 35066 Frankenberg (DE)
(74) Vertreter: Wolf, Günter, Dipl.-Ing.

(57) **Zusammenfassung**

Die Erfindung betrifft ein Regelgerät, insbesondere für Heizungsanlagen, bestehend aus einem Gehäuse(1) mit darin angeordneter Reglerelektronik und mit in der sicht- und zugriffszugänglichen Frontfläche(F) angeordneten, mit der Reglerelektronik entsprechend ver- schalteten Bedientasten(2) und Anzeigeelementen(3).
Nach der Erfindung sind die sichtseitig durchleuchtbar ausgebildeten und mit inneren Lichtquellen(4) versehenen Bedientasten (2) und/oder neben den Tasten(2) angeordnete Leuchtfelder(5) mit der Reg- lerelektronik programmiert derart verschaltet, daß in Abhängigkeit von jeder vorbetätigten Taste (2) die in Folge zu betätigende Taste(2) oder das dieser zugeordnete Leucht-feld(5) leuchtet oder blinkt.

## Beschreibung

Die Erfindung betrifft ein Regelgerät, insbesondere für Heizungsanlagen, bestehend aus einem Gehäuse mit innen angeordneter Reglerelektronik und mit in der sicht- und zugriffszugänglichen Frontfläche angeordneten, mit der Reglerelektronik entsprechend verschalteten Bedientasten und Anzeigeelementen.

Derartige Regelgeräte sind allgemein und insbesondere auch für Heizungsanlagen bekannt, von denen aus alle notwendigen Regel- und Steuervorgänge an einem Heizkessel und der zugehörigen Heizungsanlage vorgenommen bzw. auch zeitabhängig eingestellt werden können. Bezüglich der in der Frontfläche angeordneten Bedientasten und Anzeigeelemente lassen diese Geräte hinsichtlich Übersichtlichkeit und Bedienungslogik zu wünschen übrig, d.h., zumindest kommt der nicht fachkundige Benutzer in der Regel zumindest anfänglich nicht ohne Studium der Bedienungsanleitung aus, ganz abgesehen davon, daß evtl. ein noch notwendig zu vollziehender Folgebedienschritt einfach vergessen wird.

Der Erfindung liegt demgemäß die Aufgabe zugrunde, ein Regelgerät der eingangs genannten Art dahingehend zu verbessern, daß dieses, in seiner Regelelektronik entsprechend programmiert, selbsttätig den vorzunehmenden Folgebedienungsschritt anzeigt.

Diese Aufgabe ist mit einem Regelgerät der eingangs genannten Art nach der Erfindung dadurch gelöst, daß die sichtseitig durchleuchtbar ausgebildeten und mit innern Lichtquellen versehenen Bedientasten und/oder neben den Tasten angeordnete Leuchtfelder mit der Reglerelektronik derart programmiert verschaltet sind, daß in Abhängigkeit von jeder betätigten Taste die programmgemäß in Folge zu betätigende Taste und/oder das dieser zugeordnete Leuchtfeld leuchtet oder blinkt.

Soll also bspw. eine neue Uhrzeit oder ein neuer Temperaturwert eingestellt bzw. eingegeben werden, so wird zunächst die betreffende Bedientaste zur Anzeige (bspw. in einem Display als Anzeigeelemet) des momentan bestehenden Wertes gedrückt. Mit der Betätigung dieser Taste wird aber gleichzeitig die Lichtquelle der Folgeschritttaste (bspw.Wertänderung) aktiviert und bei deren Betätigung wiederum die Lichtquelle einer bevorzugt zur Gesamttastatur mit vorgesehenen Bestätigungstaste.

Die dafür notwendige Verschaltung und Programmierung innerhalb der Regelelektronik bedarf dabei keiner besonderen Darstellung und Erläuterung, da dies mit den heute verfügbaren Mitteln für jeden Elektroniker völlig unproblamtisch in die Praxis umzusetzen ist.Bevorzugt wird beim Ganzen die Ausführungsform, bei der die Tasten unmittelbar selbst jeweils mit einer entsprechend kleinen Lichtquelle ausgestattet sind.

Das erfindungsgemäße Regelgerät wird nachfolgend an Hand der zeichnerischen Darstellung eines Ausführungsbeispieles näher erläutert.

Es zeigt
- Fig.1: perspektivisch eine Ausführungsform des erfindungsgemäßen Regelgerätes;
- Fig.2: schematisch zwei bspw. vorzunehemende Bedienschritte A,B und
- Fig.3: schematisch im Schnitt eine von innen beleuchtbare Bedientaste.

Das Regelgerät besteht in bekannter Weise aus einem Gehäuse 1 mit darin angeordneter Reglerelektronik (nicht dargestellt) und mit in der sicht- und zugriffszugänglichen Frontfläche F angeordneten, mit der Reglerelektronik entsprechend verschalteten Bedientasten 2 und Anzeigeelementen 3.

Für ein solches Regelgerät ist nun wesentlich, daß die sichtseitig durchleuchtbaren und mit inneren Lichtquellen 4 versehenen Bedientasten 2 und/oder neben den Tasten 2 angeordnete Leuchtfelder 5 mit der Reglerelektronik derart programmiert verschaltet sind, daß in Abhängigkeit von jeder betätigten Taste 2 die in Folge zu betätigende Taste 2 und/oder das jeweils zugeordnete Leuchtfeld 5 leuchtet oder blinkt.

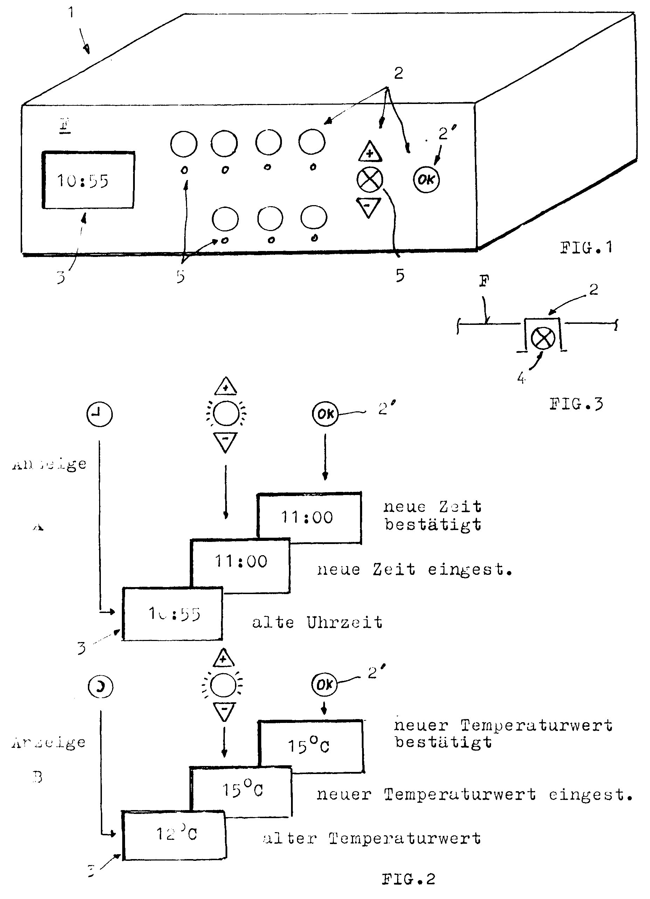

Schematisch und nur der Vollständigkeit halber ist in Fig. 3 eine Taste 2 mit darin angeordneter Lichtquelle 4 dargestellt. Sofern Leuchtfelder 5, wie in Fig.1 mit angedeutet, vorhanden sind, sind diese mit eintsprechend kleinen Lichtquellen 4 ausgestattet.

In Fig.3 sind entsprechend beschriftet zwei Bedienbeispiele dargestellt und zwar unter A die Neueinstellung der Uhrzeit und unter B die Neueinstellung der Temperatur. Zweckmäßig ist dabei auch die Bestätigungstaste 2' beleuchtbar ausgebildet oder mit einem entsprechend nah zugeordneten Leuchtfeld 5 versehen.

## Patentansprüche

1. Regelgerät, insbesondere für Heizungsanlagen, bestehend aus einem Gehäuse(1) mit darin angeordneter Reglerelektronik und mit in der sicht- und zugriffszugänglichen Frontfläche(F) angeordneten, mit der Reglerelektronik entsprechend verschalteten Bedientasten(2) und Anzeigeelementen(3),
**dadurch gekennzeichnet,**
daß die sichtseitig durchleuchtbar ausgebildeten und mit inneren Lichtquellen(4) versehenen Bedientasten(2) und/oder neben den Tasten(2) angeordnete Leuchtfelder(5) mit der Reglerelektronik programmiert derart verschaltet sind, daß in Abhängigkeit von jeder vorbetätigten Taste (2) die in Folge zu betätigende Taste(2) oder das dieser zugeordnete Leuchtfeld(5) leuchtet oder blinkt.

2. Regelgerät nach Anspruch 1,
**dadurch gekennzeichnet,**
daß in der Frontfläche(F) außer den Bedientasten(2) eine entsprechend mit der Reglerelektronik verschaltete, ebenfalls beleuchtbar ausgebildete Bestätigungstaste (2') angeordnet ist.
